# EUROPÄISCHE PATENTSCHRIFT

(11) **EP 2 319 106 B1**
(45) Veröffentlichungstag und Bekanntmachung des Hinweises auf die Patenterteilung: **04.07.2012**
(21) Anmeldenummer: 09776499.7
(22) Anmeldetag: 02.04.2009
(51) Int. Cl.: H01M 2/12

(54) **EXPLOSIONSSCHUTZ FÜR STARTERBATTERIEN**
EXPLOSION PROTECTION FOR STARTER BATTERIES
PROTECTION CONTRE LES EXPLOSIONS POUR BATTERIES DE DÉMARREUR

(30) Priorität: 30.08.2008 DE 102008045200
(43) Veröffentlichungstag der Anmeldung: 11.05.2011
(73) Patentinhaber: Frötek- Vermögensverwaltung GmbH, 37520 Osterode am Harz (DE)
(72) Erfinder: WENZL, Heinz, 37520 Osterode (DE); NIEMEYER, Gerd, 37520 Osterode (DE)
(74) Vertreter: Cohausz Hannig Borkowski Wißgott
(86) Internationale Anmeldenummer: PCT/EP2009/002402
(87) Internationale Veröffentlichungsnummer: WO 2010/022803

(56) Entgegenhaltungen:
- FR-A- 2 163 446
- JP-A- 5 217 596
- US-A- 4 751 155
- US-A- 5 217 823
- US-A- 5 352 545

## Beschreibung

Die Erfindung betrifft eine aufladbare Batterie in einer oder mehreren Zellen und einem oberhalb der Elektroden bzw. Elektrolytspiegel angeordneten Raum, der durch den Batteriedeckel verschlossen ist.

Es kann aus unterschiedlichen Gründen geschehen, dass eine Batterie explodiert, in dem eine innerhalb einer Zelle befindliche explosive Atmosphäre gezündet wird. Ursache hierfür sind sowohl äußere wie auch innere Zündquellen.

Um eine innerhalb der Batterie entstandene Explosionsdruckwelle aufzufangen, ist es aus der DE 42 32 960 bekannt, die Unterseite des Batteriedeckels mit einer Matte aus Fasermaterial zu versehen. Darüber hinaus ist es aus der US 4,751,154 bekannt, den oberen leeren Batterieraum mit einem Kunststoffschaum auszufüllen, dessen Komprimierbarkeit dazu genutzt wird, die Druckwelle einer Explosion abzufangen. Hierbei hat es sich gezeigt, dass diese bekannten Lösungen interne Explosionen nicht ausreichend mindern.

Eine ähnliche Anordnung ist auch aus US 5,352,545 bekannt.

Aufgabe der Erfindung ist es, eine aufladbare Batterie der eingangs genannten Art so zu verbessern, dass interne Explosionen sicher abgefangen werden.

Diese Aufgabe wird erfindungsgemäß dadurch gelöst, dass im Raum oberhalb der Elektroden zuunterst eine waagerechte Schicht aus Material mit Wabenstruktur und darüber eine waagerechte Schicht aus offenporigem Schaum angeordnet ist.

Durch den offenporigen Schaum oder die offene Wabenstruktur wird die Druckwelle einer Explosion in der Weise aufgefangen, dass der Druck in die Poren/Zellen oder Waben gelangt, so dass das explodierende Gas dort aufgenommen und die Druckwelle zeitlich verzögert wird. Damit werden die Auswirkungen einer Explosion wesentlich verringert, so dass in der Regel es zu keiner Zerstörung der Batteriewände und des Deckels kommt.

Besonders vorteilhaft ist es, wenn im Raum oberhalb der Elektroden zuunterst eine waagerechte Schicht aus Material mit Wabenstruktur und darüber eine waagerechte Schicht aus offenporigem Schaum angeordnet ist. Hierdurch durchläuft die Druckwelle einer Explosion einen ersten Bereich mit Waben, der dazu geeignet ist, die erste stärkere Druckwelle abzufangen und danach einen zweiten Bereich offenzelligen Schaums, der die dann abgemilderte Druckwelle eliminiert.

Vorzugsweise wird vorgeschlagen, dass der Schaum und/oder das Material mit Wabenstruktur aus Kunststoff, Glas oder Keramik besteht. Auch ist von Vorteil, wenn beim Material mit Wabenstruktur die Waben in Form kleiner zueinander paralleler, an beiden Enden offenen Röhrchen vorgesehen ist. Hierbei wird vorgeschlagen, dass beim Material mit Wabenstruktur die Waben insbesondere die die Waben bildenden Röhrchen mit ihrer Längsachse senkrecht angeordnet sind, damit eine vertikale Bewegung des Elektrolyten beim Laden und Entladen möglich ist und in der Zelle entstehende Gase aus dem Elektrolyt in den freien Raum darüber entweichen können.

Eine erhebliche Vereinfachung der Produktion ist gegeben, wenn der Schaum ein integraler Bestandteil des Deckels ist.

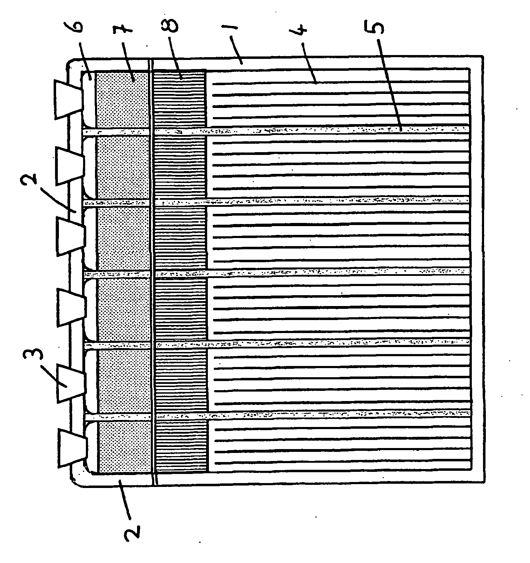

Ausführungsbeispiele der Erfindung werden im Folgenden näher beschrieben. Die Zeichnung zeigt ein Ausführungsbeispiel in einem senkrechten Schnitt.

Eine aufladbare Batterie (Akkumulator) weist ein Gehäuse 1 auf, dessen Oberseite durch einen Deckel 2 verschlossen ist, der Verschlussstopfen 3 aufweist. Das Gehäuse 1 umfasst mehrere nebeneinander liegende Zellen 4, die durch Zellentrennwände 5 voneinander getrennt sind. Zwischen den oberen Enden der Zellen 4 und dem Deckel 2 befindet sich ein luftgefülfter Raum 6.

Beim Laden einer solchen Batterie erzeugen die Zellen 4 Gase, die bei Batterien mit wässrigem Elektrolyt hauptsächlich aus Wasserstoff und Sauerstoff bestehen und damit explosionsfähiges Knallgas bilden, das aus unterschiedlichsten Ursachen sich entzünden kann.

Um die Druckwelle einer Knallgasexplosion abzufangen, ist in einem ersten, nicht dargestellten Ausführungsbeispiel der Raum 6 durch einen offenporigen Schaum 7 oder durch ein Material 8 mit offener Wabenstruktur ausgefüllt. Bei der Wahl eines Materials mit Wabenstruktur besteht dieses vorzugsweise aus kleinen, eng nebeneinander stehenden, senkrechten, geraden Röhrchen, deren Querschnitt rund oder mehreckig ist und die an beiden Enden offen sind.

In der in der Zeichnung dargestellten Ausführung ist der Raum 6 in seiner unteren Hälfte ausgefüllt mit dem Material 8 mit offener Wabenstruktur, um die erste Druckwelle abzufangen. Die darüber liegende zweite Raumhälfte ist mit einem offenporigen Schaum 7 ausgefüllt, der die abgeminderte Druckwelle aufnimmt.

Der Schaum und/oder das Material 8 mit Wabenstruktur besteht aus Kunststoff, Glas oder Keramik. Der Außendurchmesser der Waben/Röhrchen beträgt 2 - 10 mm. Vorzugsweise ist der Schaum 7 direkt am Deckel 2 befestigt und insbesondere ein integraler Bestandteil des Deckels.

In dem erfindungsgemäßen Vorschlag spielt die Elastizität der eingeführten Materialien 7, 8 keine Rolle. Eine Kompressibilität gegenüber einer Explosionswelle ist wegen der offenporigen Struktur der Materialen und einer Explosion der Gase in den Poren gering.

Die erfindungsgemäßen Lehren führen zu folgenden Wirkungen und Vorteilen:

Eine freie vertikale Beweglichkeit des Elektrolyten im unteren Bereich der Batterie durch eine vertikal ausgerichtete Wabenstruktur oder offenporigen Schaum mit großen Poren und Verbindungsbereichen, so dass der Elektrolyt und das Gas sich fast ungehindert vertikal bewegen können und nicht durch Kapillarwirkung in dem Schaum verbleiben. Die Druckwelle wird seitlich durch die Wände der Poren und Waben so oft umgeleitet, dass die Druckwelle die Außenwand nicht schlagartig trifft, sondern zeitlich "verschmiert". Nach unten stellt die Elektrolytsäule ein elastisches Element dar, das die zeitlich verschmierte Druckwelle aufnimmt und räumlich verteilt.

Eine offenporige Struktur im oberen Bereich der Zelle, so dass Gas aufgenommen werden kann, und sofern notwendig auch Elektrolyt. Bei sehr hohen Überladungen besteht der Elektrolyt aus einem Flüssigkeitsgasgemisch. Der offenporige Schaum nimmt das Gas auf. Zusätzlich kann, wenn die Poren ausreichend groß sind, auch Elektrolyt aufgenommen werden. Durch den offenporigen Schaum und/oder durch die Wabenstruktur wird erreicht, dass durch die Verminderung des freien Gasvolumens und die sich bei heftiger Überladung ergebende Druckerhöhung, es nicht zum Austritt von Elektrolyt aus den Zellen kommt. Der offenporige Schaum, wenn er sehr kleinporig ist, macht die Explosion des Gases in den Poren unmöglich und verteilt gleichzeitig die Druckwelle aus dem unteren Bereich räumlich und zeitlich weiter, so dass der Deckel 2 nur gering mechanisch belastet wird. Wenn eine gröbere Porenstruktur wegen der Aufnahme des Elektrolyt-Gasgemisches erforderlich ist, dann wirkt auch hier das Prinzip, dass die Poren den Explosionsbereich unterteilen und die Druckwelle verschmieren.

Für den Produktionsprozess ist es wichtig, dass der freie Gasraum 6 durch zwei Materialien unterteilt wird, die in der Ebene zwischen Kasten und Deckel getrennt eingebaut werden können. Auf diese Weise kann der Produktionsprozess der Batterie fast unverändert erhalten bleiben. Es ist offensichtlich sinnvoll, den durch den Einbau erzeugten freien Raum so klein wie möglich zu halten. Produktionstechnisch ist eine Höhe von ca. 1 mm nach Fertigstellung der Batterie leicht zu erreichen.

Zur Kontrolle des Elektrolyten und zum Befüllen des Elektrolyten bei der Produktion ist im Bereich des Deckels 2 eine Kompartierung möglich. Die dort vorhandene Gassäule kann nicht weiter reduziert werden. Durch das Gewinde des Stopfens ist dieser Bereich des Deckels aber besonders verstärkt.

Durch die unteren Einbauten kann auch zusätzlich eine mechanische Fixierung der Elektroden 9 erfolgen. Dies ist bei mechanisch belasteten Batterien (Baumaschinen, etc.) eine relevante Option.

Durch die Gestaltung des unteren Einbauteils 8 kann auch erreicht werden, dass das aufsteigende Gas einen unterschiedlichen Strömungswiderstand erfährt. Wenn der Strömungswiderstand durch kleine Öffnungen im Außenbereich erhöht wird, dann wird damit eine Bewegung des Elektrolyten im Außenbereich nach unten initiiert. Damit verringert sich die Säureschichtungsgefahr.

## Patentansprüche

1. Aufladbare Batterie in einer oder mehreren Zellen (4) und einem oberhalb der Elektroden angeordneten Raum (6), der durch den Batteriedeckel (2) verschlossenist, **dadurch gekennzeichnet, dass** im Raum (6) oberhalb der Elektroden zuunterst eine waagerechte Schicht aus Material (8) mit Wabenstruktur und darüber eine waagerechte Schicht aus offenporigem Schaum (7) angeordnet ist.

2. Batterie nach Anspruch 1, **dadurch gekennzeichnet, dass** der Schaum (7) und/oder das Material (8) mit Wabenstruktur aus Kunststoff, Glas oder Keramik besteht.

3. Batterie nach Anspruch 1 oder 2, **dadurch gekennzeichnet, dass** beim Material (8) mit Wabenstruktur die Waben in Form kleiner zueinander paralleler, beidseitig offener Röhrchen vorgesehen ist.

4. Batterie nach einem der vorherigen Ansprüche, **dadurch gekennzeichnet, dass** beim Material (8) mit Wabenstruktur die Waben insbesondere die die Waben bildenden Röhrchen mit ihrer Längsachse senkrecht angeordnet sind.

5. Batterie nach einem der vorherigen Ansprüche, **dadurch gekennzeichnet, dass** die beiden Einbauteile Schaum (7) und Material (8) getrennt sind.

6. Batterie nach einem der vorherigen Ansprüche, **dadurch gekennzeichnet, dass** der Schaum 7 ein integraler Bestandteil des Deckels (2) ist.

## Claims

1. Rechargeable battery in one or several cells (4) and a space (6) arranged above the electrodes, which is closed by the battery cover (2), **characterised in that** in the space (6) above the electrodes a horizontal layer of material (8) with a honeycomb structure is arranged right at the bottom and a horizontal layer of foam with open pores (7) is arranged on top.

2. Battery according to claim 1, **characterised in that** the foam (7) and/or the material (8) with a honeycomb structure consists of glass or ceramic.

3. Battery according to claim 1 or 2, **characterised in that** in the material (8) with a honeycomb structure the honeycombs are provided in the form of small tubes parallel to each other, which are open on both sides.

4. Battery according to one of the previous claims, **characterised in that** in the material (8) with a honeycomb structure the tubes forming the honeycombs are arranged with their longitudinal axis vertical.

5. Battery according to one of the previous claims, **characterised in that** both the foam (7) and material (8) inserts are separate.

6. Battery according to one of the previous claims, **characterised in that** the foam 7 is an integral part of the cover (2).

## Revendications

1. Batterie rechargeable en un ou plusieurs éléments (4) et un compartiment (6), disposé au-dessus des électrodes et fermé par le couvercle de batterie (2), **caractérisée en ce que**, dans le compartiment (6) situé au-dessus des électrodes, une couche horizontale composée d'un matériau (8) avec une structure en nid d'abeilles est disposée au-dessous et une couche horizontale composée d'une mousse (7) à pores ouverts est disposée au-dessus.

2. Batterie suivant la revendication 1, **caractérisée en ce que** la mousse (7) et/ou le matériau (8) avec une structure en nid d'abeilles se composent de matière plastique, de verre ou de céramique.

3. Batterie suivant l'une des revendications 1 et 2, **caractérisée en ce que** les nids d'abeilles de la structure du matériau (8) sont prévus en forme de tubes parallèles entre eux, ouverts bilatéralement.

4. Batterie suivant l'une des revendications précédentes, **caractérisée en ce que** les nids d'abeilles de la structure du matériau (8), en particulier les tubes formant les nids d'abeilles, sont disposés verticalement par leur axe longitudinal.

5. Batterie suivant l'une des revendications précédentes, **caractérisée en ce que** les deux pièces de montage mousse (7) et matériau (8) sont séparées.

6. Batterie suivant l'une des revendications précédentes, **caractérisée en ce que** la mousse (7) est un composant intégral du couvercle (2).
